# EUROPEAN PATENT SPECIFICATION

(11) **EP 2 618 077 B1**
(45) Date of publication and mention of the grant of the patent: **26.10.2016**
(21) Application number: 13151639.5
(22) Date of filing: 17.01.2013
(51) Int. Cl.: F25B 39/00, F25B 39/02, F28F 9/02

(54) **Heat exchanger and air conditioner including same**
Wärmetauscher und Klimaanlage damit
Échangeur de chaleur et climatiseur comprenant celui-ci

(30) Priority: 20.01.2012 KR 20120006965
(43) Date of publication of application: 24.07.2013
(73) Proprietor: LG Electronics Inc., Youngdungpo-gu Seoul 150-721 (KR)
(72) Inventor: Kim, Kakjoong, 153-023 Seoul (KR); Kim, Donghwi, 153-023 Seoul (KR); Sa, Yongcheol, 153-023 Seoul (KR); Park, Junseong, 153-023 Seoul (KR)
(74) Representative: Vossius & Partner Patentanwälte Rechtsanwälte mbB

(56) References cited:
- WO-A2-2010/008960
- JP-A- 2003 121 019

## Description

The present disclosure relates to an air conditioner including a heat exchanger and, more particularly, to a heat exchanger in which the which the passage of a refrigerant is alternated in a heat exchange unit.

In general, an air conditioner is an apparatus configured to include a compressor, an outdoor heat exchanger, an expansion valve, and an indoor heat exchanger, to cool or heat the interior of a room using a refrigerating cycle. That is, the air conditioner may include a cooler for cooling the interior of a room and a heater for heating the interior of a room. The air conditioner may also be formed of a combination cooling and heating air conditioner for cooling or heating the interior of a room.

If the air conditioner is formed of the combination cooling and heating air conditioner, the air conditioner further includes a 4-way valve for changing the passage of a refrigerant, compressed by the compressor, depending on an air cooling operation or a heating operation. That is, in the air cooling operation, the refrigerant compressed by the compressor flows into the outdoor heat exchanger through the 4-way valve, and the outdoor heat exchanger functions as a condenser. Next, the refrigerant condensed by the outdoor heat exchanger is expanded by the expansion valve, and the expanded refrigerant flows into the indoor heat exchanger. In this case, the indoor heat exchanger functions as an evaporator. Next, the refrigerant evaporated by the indoor heat exchanger flows into the compressor through the 4-way valve.

Meanwhile, in the heating operation, the refrigerant compressed by the compressor flows in the indoor heat exchanger through the 4-way valve, and the indoor heat exchanger functions as a condenser. Next, the refrigerant condensed by the indoor heat exchanger is expanded by the expansion valve, and the expanded refrigerant flows into the outdoor heat exchanger. In this case, the outdoor heat exchanger functions as an evaporator. Next, the refrigerant evaporated by the outdoor heat exchanger flows into the compressor through the 4-way valve.

JP 2003-121019 A discloses an air conditioner enabling efficient operation according to operation modes such as heating, cooling, and defrosting operation.

WO 2010/008960 A2 describes a microchannel heat exchanger having at least two manifolds, with the at least two manifolds communicating with a respective one of first and second plurality of heat exchanger tube banks, the first and second plurality of heat exchange tube banks being intertwined within a single microchannel heat exchanger core.

One object is to provide a heat exchanger in which the passage of a refrigerant is alternated in a heat exchange unit.

Objects of the present invention are not limited to the above-mentioned objects, and other objects that have not been described above will be evident to those skilled in the art from the following description.

With the present invention, an air conditioner as defined in the claims is provided. An air conditioner according to the present invention includes a compressor; and a heat exchanger, including a first header pipe to flow therein a refrigerant compressed by the compressor, a heat exchange unit coupled to the first header pipe and to thermally exchange the refrigerant with air, a bypass pipe to have the refrigerant, thermally exchanged in the heat exchange unit, to pass therethrough in an air cooling operation, a second header pipe coupled to the heat exchange unit and to have the refrigerant passing through the bypass pipe, to flow therein in the air cooling operation, a plurality of first header branch pipes to couple the first header pipe and the heat exchange unit, and a plurality of second header branch pipes to couple the second header pipe and the heat exchange unit, wherein at least one of second header branch pipe crosses at least one of the first header branch pipe.

A heat exchanger may include a first header pipe to have a refrigerant compressed by a compressor to flow therein; a heat exchange unit including a plurality of first refrigeration tubes and a plurality of second refrigeration tubes to thermally exchange the refrigerant with air; a plurality of first header branch pipes coupling the first header pipe with corresponding first refrigeration tubes in the heat exchange unit; a bypass pipe to have the refrigerant, thermally exchanged in the heat exchange unit, passing therethrough in the air cooling operation; a second header pipe to have the refrigerant passing through the bypass pipe to flow therein; and a plurality of second header branch pipes coupling the second header pipe with corresponding second refrigeration tubes in the heat exchange unit, wherein at least two first refrigeration tubes have at least one second refrigeration tube therebetween.

Details of other embodiments are included in the detailed description and drawings.

The above and other objects and features of the present disclosure will become apparent from the following description of some embodiments given in conjunction with the accompanying drawings, in which:
FIG. 1 shows a construction of an air conditioner according to an embodiment of the present invention; and
FIGS. 2A, 2B, and 3 show constructions of outdoor heat exchangers according to embodiments of the present invention.

Merits and characteristics of the present disclosure and methods for achieving them will become more apparent from the following embodiments taken in conjunction with the accompanying drawings. However, the present invention is not limited to the disclosed embodiments, but may be implemented in various ways. The embodiments are provided to complete the disclosure and to allow those having ordinary skill in the art to fully understand the principles of the present invention. The same reference numbers may be used throughout the drawings to refer to the same or like parts.

Hereinafter, embodiments of the present invention will be described in detail with reference to the accompanying drawings for describing an outdoor heat exchanger.

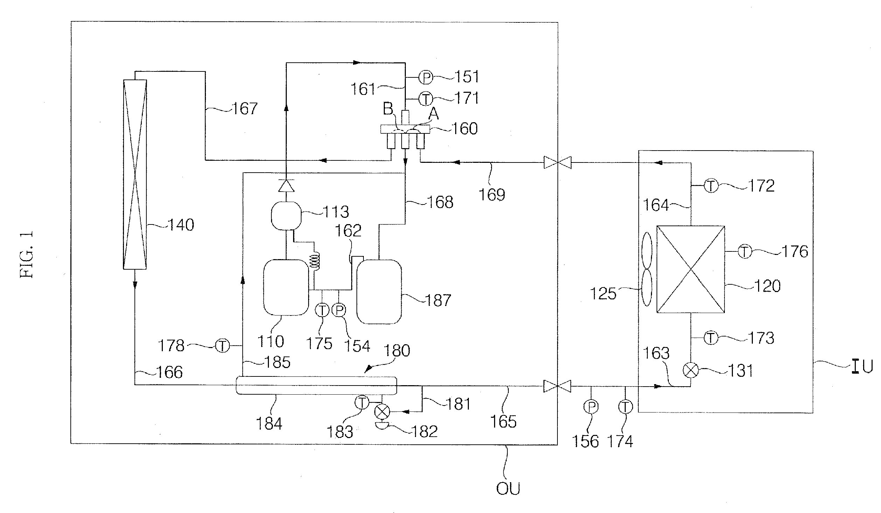

FIG. 1 shows a construction of an air conditioner according to an embodiment of the present invention.

The air conditioner according to the embodiment of the present invention includes an outdoor unit OU and an indoor unit IU.

The outdoor unit OU includes a compressor 110, an outdoor heat exchanger 140, and a supercooler 180. The air conditioner may include one or a plurality of the outdoor units OU.

The compressor 110 compresses a refrigerant of a low temperature and low pressure into a refrigerant of a high temperature and high pressure. The compressor 110 may have various structures, and an inverter type compressor or a constant speed compressor may be adopted as the compressor 110. A discharge temperature sensor 171 and a discharge pressure sensor 151 are installed on the discharge pipe 161 of the compressor 110. Furthermore, a suction temperature sensor 175 and a suction pressure sensor 154 are installed on the suction pipe 162 of the compressor 110.

The outdoor unit OU is illustrated as including one compressor 110, but the present invention is not limited thereto. The outdoor unit OU may include a plurality of the compressors and may include both an inverter type compressor and a constant speed compressor.

An accumulator 187 may be installed in the suction pipe 162 of the compressor 110 in order to prevent a refrigerant of a liquid state from entering the compressor 110. An oil separator 113 for collecting oil from the refrigerant discharged from the compressor 110 may be installed in the discharge pipe 161 of the compressor 110.

A 4-way valve 160 is a passage switch valve for switching cooling and heating. The 4-way valve 160 guides the refrigerant compressed by the compressor 110 to the outdoor heat exchanger 140 in an air cooling operation and guides the compressed refrigerant to an indoor heat exchanger 120 in a heating operation. The 4-way valve 160 configures to state A in the air cooling operation and configures to state B in the heating operation.

The outdoor heat exchanger 140 is disposed in an outdoor space, and the refrigerant passing through the outdoor heat exchanger 140 is thermally exchanged with outdoor air at the outdoor heat exchanger 140. The outdoor heat exchanger 140 functions as a condenser in an air cooling operation and functions as an evaporator in a heating operation.

The outdoor heat exchanger 140 is coupled to a first inflow pipe 166 and then coupled to the indoor unit IU through a liquid pipe 165. The outdoor heat exchanger 140 is coupled to a second inflow pipe 167 and then coupled to the 4-way valve 160.

The supercooler 180 includes a supercooling heat exchanger 184, a second bypass pipe 181, a supercooling expansion valve 182, and a discharge pipe 185. The supercooling heat exchanger 184 is disposed on the first inflow pipe 166. In an air cooling operation. the second bypass pipe 181 functions to bypass the refrigerant discharged from the supercooling heat exchanger 184 so that the discharged refrigerant flows in the supercooling expansion valve 182.

The supercooling expansion valve 182 is disposed on the second bypass pipe 181. The supercooling expansion valve 182 lowers the pressure and temperature of a refrigerant by constricting the refrigerant of a liquid state that flows in the second bypass pipe 181 and then forces the refrigerant to flow in the supercooling heat exchanger 184. The supercooling expansion valve 182 may be various types, and a linear expansion valve may be used as the supercooling expansion valve 182 for convenience of use. A supercooling temperature sensor 183 for detecting temperature of the refrigerant constricted by the supercooling expansion valve 182 is installed on the second bypass pipe 181.

In an air cooling operation, a condensed refrigerant passing through the outdoor heat exchanger 140 is super-cooled through a thermal exchange with a refrigerant of low temperature, introduced through the second bypass pipe 181, in the supercooling heat exchanger 184, and the super-cooled refrigerant flows in the indoor unit IU.

The refrigerant passing through the second bypass pipe 181 is thermally exchanged in the supercooling heat exchanger 184, and the thermally exchanged refrigerant flows in the accumulator 187 through the discharge pipe 185. A discharge pipe temperature sensor 178 for detecting temperature of the refrigerant entering the accumulator 187 is installed on the discharge pipe 185.

A liquid pipe temperature sensor 174 and a liquid pipe pressure sensor 156 are installed on the liquid pipe 165 which couples the supercooler 180 and the indoor unit IU.

In the air conditioner according to the embodiment of the present invention, the indoor unit IU includes the indoor heat exchanger 120, an indoor fan 125, and an indoor expansion valve 131. The air conditioner may include one or a plurality of the indoor units IU.

The indoor heat exchanger 120 is disposed in an indoor space, and a refrigerant passing through the indoor heat exchanger 120 is thermally exchanged with indoor air at the indoor heat exchanger 120. The indoor heat exchanger 120 functions as an evaporator in an air cooling operation and functions as a condenser in a heating operation. An indoor temperature sensor 176 for detecting indoor temperature is installed at the indoor heat exchanger 120.

The indoor expansion valve 131 is an apparatus for constricting an inflow refrigerant in an air cooling operation. The indoor expansion valve 131 is installed in the indoor inlet pipe 163 of the indoor unit IU. The indoor expansion valve 131 may be various types, and a linear expansion valve may be used as the indoor expansion valve 131, for convenience of use. It is preferred that the indoor expansion valve 131 be opened in a set opening degree in an air cooling operation and be fully opened in a heating operation.

An indoor inlet pipe temperature sensor 173 is installed on the indoor inlet pipe 163. The indoor inlet pipe temperature sensor 173 may be installed between the indoor heat exchanger 120 and the indoor expansion valve 131. Furthermore, an indoor outlet pipe temperature sensor 172 is installed on the indoor outlet pipe 164.

In the air cooling operation of the above-described air conditioner, the flow of a refrigerant is described below.

A refrigerant of a high temperature and high pressure and a gaseous state, discharged from the compressor 110, flows into the outdoor heat exchanger 140 through the 4-way valve 160 and the second inflow pipe 167. The refrigerant is thermally exchanged with outdoor air at the outdoor heat exchanger 140, and thus condensed. The refrigerant discharged from the outdoor heat exchanger 140 flows into the supercooler 180 through the first inflow pipe 166. Next, the refrigerant is super-cooled by the supercooling heat exchanger 184, and the super-cooled refrigerant flows into the indoor unit IU.

A part of the refrigerant super-cooled by the supercooling heat exchanger 184 is constricted by the supercooling expansion valve 182, so that the refrigerant passing through the supercooling heat exchanger 184 is super-cooled. The refrigerant super-cooled by the supercooling heat exchanger 184 flows into the accumulator 187.

The refrigerant flowing into the indoor unit IU is constricted by the indoor expansion valve 131 opened in a set opening degree and is then thermally exchanged with indoor air at the indoor heat exchanger 120, thus being evaporated. The evaporated refrigerant flows into the compressor 110 through the 4-way valve 160 and the accumulator 187.

In the heating operation of the above-described air conditioner, the flow of a refrigerant is described below.

A refrigerant of a high temperature and high pressure and a gaseous state, discharged from the compressor 110, flows into the indoor unit IU through the 4-way valve 160. Here, the indoor expansion valves 131 of the indoor units IU are fully opened. The refrigerant discharged from the indoor unit IU flows into the outdoor heat exchanger 140 through the first inflow pipe 166. Next, the refrigerant is thermally exchanged with outdoor air at the outdoor heat exchanger 140, thus being evaporated. The evaporated refrigerant flows into the suction pipe 162 of the compressor 110 through the second inflow pipe 167, the 4-way valve 160, and the accumulator 187.

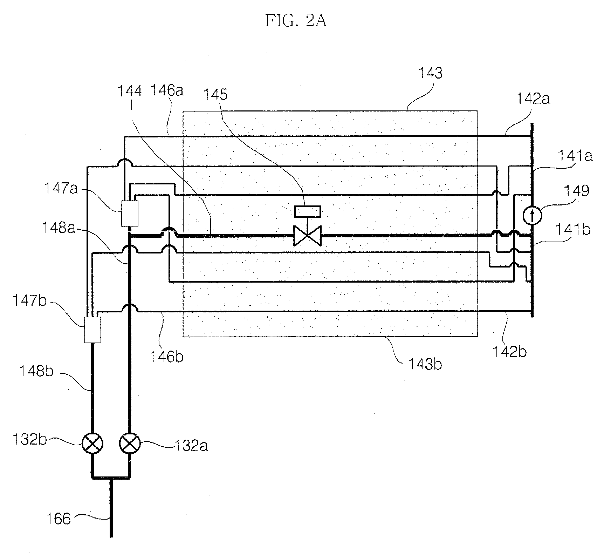

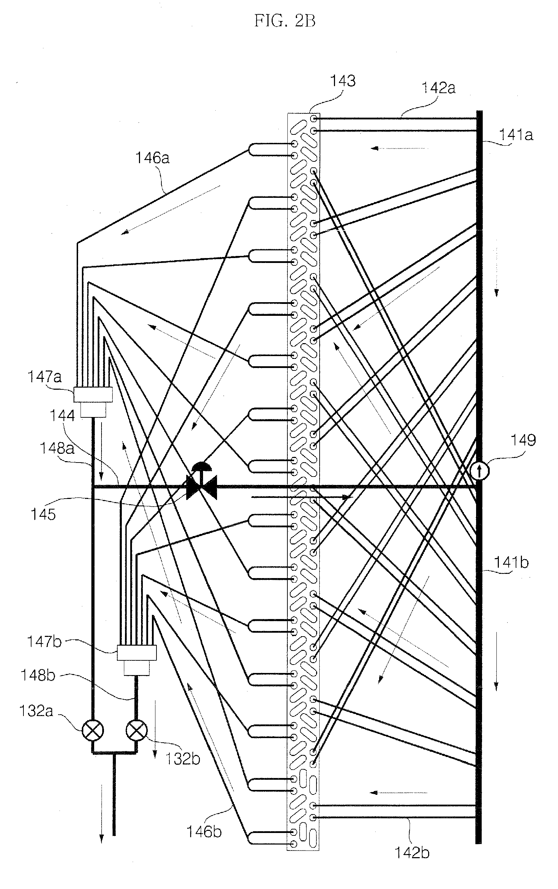

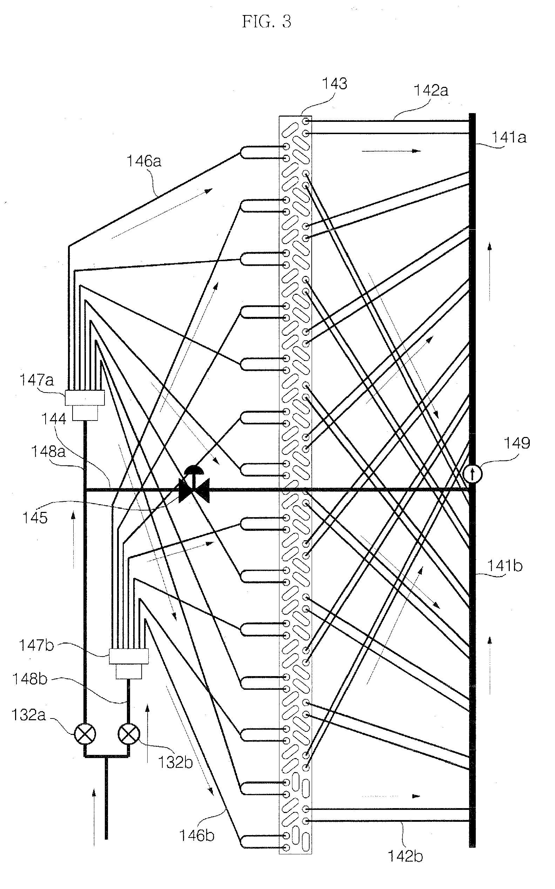

FIGS. 2A, 2B, and 3 show constructions of outdoor heat exchangers according to embodiments of the present invention. In FIG. 2A, the heat exchange unit 143 is shown in plan view, and in FIGS. 2B and 3, the heat exchange unit 143 is shown is cross-sectional view.

The outdoor heat exchanger 140 according to an embodiment of the present invention includes a first header pipe 141a configured to have a refrigerant, compressed by the compressor in an air cooling operation, to flow therein. A heat exchange unit 143 is coupled to the first header pipe 141a and is configured to thermally exchange a refrigerant with air. A bypass pipe 144 is configured to have the refrigerant, thermally exchanged in the heat exchange unit 143 in an air cooling operation, to pass therethrough. A second header pipe 141b is configured to have the refrigerant, passing through the bypass pipe 144, to flow therein in the air cooling operation and is coupled to the heat exchange unit 143. A plurality of first header branch pipes 142a is configured to couple the first header pipe 141a and the heat exchange unit 143, and a plurality of second header branch pipes 142b is configured to couple the second header pipe 141b and the heat exchange unit 143, and cross the plurality of first header branch pipes 142a.

The first header pipe 141a has one end coupled to the second inflow pipe 167, and thus is coupled to the compressor 110. The first header pipe 141a has the other end coupled to the bypass pipe 144 and the second header pipe 141b. A check valve 149 is disposed at the other end of the first header pipe 141 a. The check valve 149 prevents a refrigerant from flowing from the first header pipe 141a to the second header pipe 141b, but allows a refrigerant to flow from the second header pipe 141b to the first header pipe 141a.

The first header pipe 141a is coupled to the plurality of first header branch pipes 142a. The first header pipe 141a is branched into the plurality of first header branch pipes 142a and is coupled to one end of the heat exchange unit 143.

The plurality of first header branch pipes 142a couples the first header pipe 141a and the heat exchange unit 143. The plurality of first header branch pipes 142a is branched from the first header pipe 141a and is coupled to the one end of the heat exchange unit 143. The plurality of first header branch pipes 142a is configured to cross the plurality of second header branch pipes 142b and is coupled to the one end of the heat exchange unit 143. In other words, the plurality of first header branch pipes 142a and the plurality of second header branch pipes 142b are alternately coupled to the heat exchange unit 143. The plurality of first header branch pipes 142a and the plurality of second header branch pipes 142b may be alternately coupled to the heat exchange unit 143 one by one or may be classified in groups of one or two or more and then alternately coupled to the heat exchange unit 143.

The plurality of first header branch pipes 142a and the plurality of second header branch pipes 142b are alternately coupled to one end of the heat exchange unit 143, and a plurality of first distribution branch pipes 146a and a plurality of second distribution branch pipes 146b are alternately coupled to the other end of the heat exchange unit 143. In this embodiment, the heat exchange unit 143 includes a plurality of refrigerant tubes positioned parallel to each other through which a refrigerant flows and a plurality of electric heat pins. and thermally exchanges the refrigerant with air.

The plurality of first header branch pipes 142a and the plurality of second header branch pipes 142b are alternately coupled to respective refrigerant tubes such that at least two refrigerant tubes coupled to the first header branch pipes 142a have at least one refrigerant tube coupled to the second header branch pipe 142b therebetween. Or, the plurality of first header branch pipes 142a and the plurality of second header branch pipes 142b are alternately coupled to respective refrigerant tubes such that at least two refrigerant tubes coupled to the second header branch pipes 142b have at least one refrigerant tube coupled to the first header branch pipe 142a therebetween. Therebetween includes refrigerant tubes being immediately next to each other or there can be intervening refrigerant tubes.

Similarly, the plurality of first distribution branch pipes 146a and the plurality of second distribution branch pipes 146b are alternately coupled to respective refrigerant tubes such that at least two refrigerant tubes coupled to the first distribution branch pipes 146a have at least one refrigerant tube coupled to the second distribution branch pipe 146b therebetween. Or, the plurality of first distribution branch pipes 146a and the plurality of second distribution branch pipes 146b are alternately coupled to respective refrigerant tubes such that at least two refrigerant tubes coupled to the second distribution branch pipe 146b have at least one refrigerant tube coupled to the first distribution branch pipe 146a therebetween. Therebetween includes refrigerant tubes being immediately next to each other or there can be intervening refrigerant tubes.

The plurality of first header branch pipes 142a and the plurality of second header branch pipes 142b are alternately coupled to one ends of the plurality of refrigerant tubes of the heat exchange unit 143, and the plurality of first distribution branch pipes 146a and the plurality of second distribution branch pipes 146b are alternately coupled to the other end of the plurality of refrigerant tubes of the heat exchange unit 143. The refrigerant tube coupled to the first header branch pipe 142a is coupled to the first distribution branch pipe 146a, and the refrigerant tube coupled to the second header branch pipe 142b is coupled to the second distribution branch pipe 146b.

The plurality of first distribution branch pipes 146a couples a first distributor 147a and the heat exchange unit 143. The plurality of first distribution branch pipes 146a is merged into the first distributor 147a. The plurality of first distribution branch pipes 146a is coupled to the other end of the heat exchange unit 143 and is configured to cross the plurality of second distribution branch pipes 146b. In other words, the plurality of first distribution branch pipes 146a and the plurality of second distribution branch pipes 146b are alternately coupled to the heat exchange unit 143. The plurality of first distribution branch pipes 146a and the plurality of second distribution branch pipes 146b may be alternately coupled to the heat exchange unit 143 one by one or may be classified in groups of one or two or more and then alternately coupled to the heat exchange unit 143.

The first distributor 147a couples the plurality of first distribution branch pipes 146a and a first distribution pipe 148a. The plurality of first distribution branch pipes 146a is merged and coupled to the first distributor 147a. The first distributor 147a is coupled to the heat exchange unit 143 through the plurality of first distribution branch pipes 146a.

The first distribution pipe 148a is coupled to the first distributor 147a. The first distribution pipe 148a is coupled to the other end of the heat exchange unit 143 through the first distributor 147a and the plurality of first distribution branch pipes 146a.

The first distribution pipe 148a is coupled to the first inflow pipe 166. The first distribution pipe 148a and a second distribution pipe 148b are merged into the first inflow pipe 166.

A first expansion valve 132a for controlling the degree of opening of the first distribution pipe 148a is disposed in the first distribution pipe 148a. The first expansion valve 132a may constrict, bypass, or block a refrigerant passing through the first distribution pipe 148a.

The bypass pipe 144 has one end coupled to the first distribution pipe 148a and the other end coupled to the second header pipe 141b. An intermittent valve 145 is disposed in the bypass pipe 144 and is opened or closed in order to control the flow of a refrigerant. The intermittent valve 145 may be opened so that a refrigerant flows from the first distributor 147a to the second header pipe 141b and may be closed so that a refrigerant does not flow from the second header pipe 141b to the first distributor 147a.

In accordance with an embodiment, the bypass pipe 144 may be coupled to the first distributor 147a or may be coupled to the plurality of first header branch pipes 142a.

The second header pipe 141b is coupled to the bypass pipe 144 and the first header pipe 141a. The second header pipe 141b is coupled to the plurality of second header branch pipes 142b. The second header pipe 141b is branched into the plurality of second header branch pipes 142b and then coupled to one end of the heat exchange unit 143.

The plurality of second header branch pipes 142b couples the second header pipe 141b and the heat exchange unit 143. The plurality of second header branch pipes 142b is branched from the second header pipe 141b and then coupled to the one end of the heat exchange unit 143. The plurality of second header branch pipes 142b is coupled to the one end of the heat exchange unit 143 and is configured to cross the plurality of first header branch pipes 142a. That is, the plurality of second header branch pipes 142b and the plurality of first header branch pipes 142a are alternately coupled to the heat exchange unit 143. The plurality of second header branch pipes 142b and the plurality of first header branch pipes 142a may be alternately coupled to the heat exchange unit 143 one by one or may be classified in groups of one or two or more and then alternately coupled to the heat exchange unit 143.

The plurality of second distribution branch pipes 146b couples a second distributor 147b and the heat exchange unit 143. The plurality of second distribution branch pipes 146b is merged into the second distributor 147b. The plurality of second distribution branch pipes 146b is coupled to the other end of the heat exchange unit 143 and is configured to cross the plurality of first distribution branch pipes 146a. That is, the plurality of second distribution branch pipes 146b and the plurality of first distribution branch pipes 146a are alternately coupled to the heat exchange unit 143. The plurality of second distribution branch pipes 146b and the plurality of first distribution branch pipes 146a may be alternately coupled to the heat exchange unit 143 one by one or may be classified in groups of one or two or more and then alternately coupled to the heat exchange unit 143.

The second distributor 147b couples the plurality of second distribution branch pipes 146b and the second distribution pipe 148b. The plurality of second distribution branch pipes 146b is merged and coupled to the second distributor 147b. The second distributor 147b is coupled to the heat exchange unit 143 through the plurality of second distribution branch pipes 146b.

The second distribution pipe 148b is coupled to the second distributor 147b. The second distribution pipe 148b is coupled to the other end of the heat exchange unit 143 through the second distributor 147b and the plurality of second distribution branch pipes 146b.

The second distribution pipe 148b is coupled to the first inflow pipe 166. The second distribution pipe 148b and the first distribution pipe 148a are merged into the first inflow pipe 166.

A second expansion valve 132b for controlling the degree of opening of the second distribution pipe 148b is disposed in the second distribution pipe 148b. The second expansion valve 132b may constrict, bypass, or block a refrigerant passing through the second distribution pipe 148b.

The flow of a refrigerant in the air cooling operation of the above-described outdoor heat exchanger is described below with reference to FIG. 2.

A refrigerant compressed by the compressor 110 flows into the first header pipe 141a through the second inflow pipe 167. The check valve 149 prevents the refrigerant, flowing into the first header pipe 141a, from flowing into the second header pipe 141b. The refrigerant flowing into the first header pipe 141a flows into the heat exchange unit 143 through the plurality of first header branch pipes 142a.

The refrigerant flowing into the heat exchange unit 143 is thermally exchanged with air, thus being condensed. The refrigerant condensed by the heat exchange unit 143 flows into the plurality of first distribution branch pipes 146a and then flows into the first distribution pipe 148a via the first distributor 147a. In the air cooling operation, the first expansion valve 132a is closed. Thus, the refrigerant flowing into the first distribution pipe 148a does not flow into the first inflow pipe 166, but flows into the bypass pipe 144.

The refrigerant passing through the bypass pipe 144 flows into the second header pipe 141b. The refrigerant flowing into the second header pipe 141b flows into the heat exchange unit 143 through the plurality of second header branch pipes 142b.

The refrigerant flowing into the heat exchange unit 143 is condensed again through a thermal exchange with air. Here, since the plurality of second header branch pipes 142b and the plurality of first header branch pipes 142a are alternately coupled to the heat exchange unit 143, the refrigerants flowing from the plurality of second header branch pipes 142b to the heat exchange unit 143 flow between the refrigerants flowing from the plurality of first header branch pipes 142a to the heat exchange unit 143.

The refrigerant condensed by the heat exchange unit 143 flows into the plurality of second distribution branch pipes 146b and then flows into the second distribution pipe 148b via the second distributor 147b. In the air cooling operation, the second expansion valve 132b is fully opened. Thus, the refrigerant flowing into the second distribution pipe 148b flows into the first inflow pipe 166 and then flows into the indoor unit IU through the liquid pipe 165.

The flow of the refrigerant in the heating operation of the above-described outdoor heat exchanger is described below with reference to FIG. 3.

A refrigerant condensed by the indoor heat exchanger 120 of the indoor unit IU flows into the first inflow pipe 166 through the liquid pipe 165. The refrigerant flowing into the first inflow pipe 166 flows into the first distribution pipe 148a and the second distribution pipe 148b.

The refrigerant flowing into the second distribution pipe 148b is expanded by the second expansion valve 132b whose degree of opening is controlled. The refrigerant expanded by the second expansion valve 132b flows into the heat exchange unit 143 through the second distributor 147b and the plurality of second distribution branch pipes 146b.

The refrigerant flowed into the heat exchange unit 143 is thermally exchanged with air, thus being evaporated. The refrigerant evaporated by the heat exchange unit 143 flows into the second header pipe 141b via the second header branch pipe 142b.

In the heating operation, the intermittent valve 145 is closed, and thus the refrigerant flowing into the second header pipe 141b does not pass through the bypass pipe 144. The refrigerant flowing into the second header pipe 141b flows into the first header pipe 141a.

Meanwhile, the refrigerant flowing into the first distribution pipe 148a does not flow into the second header pipe 141b because the intermittent valve 145 is closed in the heating operation. Accordingly, the refrigerant flowing into the first distribution pipe 148a is expanded by the first expansion valve 132a whose degree of opening is controlled. The refrigerant expanded by the first expansion valve 132a flows into the plurality of first distribution branch pipes 146a via the first distributor 147a.

The refrigerant flowing into first distribution branch pipes 146a flows into the heat exchange unit 143. The refrigerant flowing into the heat exchange unit 143 is thermally exchanged with air, and thus evaporated.

The plurality of second distribution branch pipes 146b and the plurality of first distribution branch pipes 146a are alternately coupled to the heat exchange unit 143. Accordingly, the refrigerants flowing from the plurality of second distribution branch pipes 146b to the heat exchange unit 143 flow between the refrigerants flowing from the plurality of first distribution branch pipes 146a to the heat exchange unit 143.

The refrigerant evaporated by the heat exchange unit 143 flows into the first header pipe 141a through the plurality of first header branch pipes 142a. The refrigerant flowing into the first header pipe 141a is merged with the refrigerant passing through the second header pipe 141b. Next, the merged refrigerant flows into the second inflow pipe 167, and then into the compressor 110.

In the heating operation, the generation of frost is not concentrated on a part of the heat exchange unit 143 because the refrigerant passing through the plurality of first distribution branch pipes 146a from the heat exchange unit 143 and the refrigerant passing through the plurality of second distribution branch pipes 146b from the heat exchange unit 143 sequentially pass within the heat exchange unit 143.

Furthermore, in a defrosting operation for operating a cooling cycle in order to remove frost when the frost is generated, frost generated in the heat exchange unit 143 may be uniformly removed because the refrigerant passing through the plurality of first header branch pipes 142a from the heat exchange unit 143 and the refrigerant passing through the plurality of second header branch pipes 142b from the heat exchange unit 143 sequentially pass within the heat exchange unit 143.

The outdoor heat exchanger according to embodiments of the present invention has one or more of the following advantages.

First, there is an advantage in that the generation of frost is not concentrated on the variable heat exchanger in which condensation is performed twice in an air cooling operation because refrigerants flowing through different paths uniformly pass through the heat exchanger in a heating operation.

Second, there is an advantage in that frost may be uniformly removed because refrigerants flowing through different paths uniformly pass through the heat exchanger in a defrosting operation.

Effects of the embodiments of the present invention are not limited to the above-mentioned effects, and other effects that have not been described above will be evident to those skilled in the art from the following description.

The heat exchanger may be used in residential air conditioners, commercial air conditioners, and vehicles, such as cars and trucks. Vehicles such as electric cars and hybrid cars may take advantage of the air conditioners using the heat exchanger.

Furthermore, although the preferred embodiments of the present invention have been illustrated and described, the present invention is not limited to the above specific embodiments, and a person having ordinary skill in the art to which the invention belongs may modify the embodiments in various ways.

The modified embodiments should not be interpreted individually from the technical spirit or prospect of the present invention.

## Claims

1. An air conditioner, comprising:
a compressor (110); and
a heat exchanger (140), including
a first header pipe (141a) to flow therein a refrigerant compressed by the compressor (110),
a heat exchange unit (143) coupled to the first header pipe and to thermally exchange the refrigerant with air,
a bypass pipe (144) to have the refrigerant, thermally exchanged in the heat exchange unit (143), to pass therethrough in an air cooling operation,
a second header pipe (141b) coupled to the heat exchange unit (143) and to have the refrigerant passing through the bypass pipe (144), to flow therein in the air cooling operation,
**characterized by**:
a plurality of first header branch pipes (142a) to couple the first header pipe (141a) and the heat exchange unit (143), and
a plurality of second header branch pipes (142b) to couple the second header pipe (141b) and the heat exchange unit (143),
wherein the heat exchange unit (143) comprises a plurality of refrigerant tubes, and the plurality of first header branch pipes (142a) and the plurality of second header branch pipes (142b) are alternately coupled to a respective end of the plurality of refrigerant tubes,
wherein the heat exchanger (140) further comprises:
a plurality of first distribution branch pipes (146a) coupled to the heat exchange unit (143) and to have the refrigerant, thermally exchanged in the heat exchange unit (143) after the refrigerant passes through the first header pipe (141a), to flow therein, and
a plurality of second distribution branch pipes (146b) coupled to the heat exchange unit (143) and to have the refrigerant, thermally exchanged in the heat exchange unit (143) after the refrigerant passes through the second header pipe (141b), to flow therein, wherein at least one of second distribution branch pipes (146b) crosses at least one of the first distribution branch pipes (146a), and
wherein the plurality of first distribution branch pipes (146a) and the plurality of second distribution branch pipes (146b) are alternately coupled to a respective another end of the plurality of refrigerant tubes.

2. The air conditioner of claim 1, wherein the plurality of first header branch pipes (142a) and the plurality of second header branch pipes (142b) are alternately coupled to the respective end of the plurality of refrigerant tubes one by one.

3. The air conditioner of claim 1, wherein the plurality of first header branch pipes (142a) and the plurality of second header branch pipes (142b) are alternately coupled to the respective end of the plurality of refrigerant tubes in groups of one or more.

4. The air conditioner of any of claims 1 to 3,
wherein the first header pipe (141a) has one end coupled to the compressor (110),
the first header pipe (141a) has the other end coupled to the bypass pipe (144) and the second header pipe (141b), and
the heat exchanger (140) further comprises a check valve (149) disposed in the first header pipe (141a) or the second header pipe (141b) to prevent the refrigerant from flowing from the first header pipe (141a) to the second header pipe (141b).

5. The air conditioner of any of claims 1 to 4, wherein the heat exchanger (140) further comprises an intermittent valve (145) disposed in the bypass pipe (144) to open or close in order to control the flow of the refrigerant in the bypass pipe (144).

6. The air conditioner of any of claims 1 to 5, wherein the plurality of first distribution branch pipes (146a) and the plurality of second distribution branch pipes (146b) are alternately coupled to the respective another end of the plurality of refrigerant tubes one by one.

7. The air conditioner of any of claims 1 to 5, wherein the plurality of first distribution branch pipes (146a) and the plurality of second distribution branch pipes (146b) are alternately coupled to the respective another end of the plurality of refrigerant tubes in groups of one or more.

8. The air conditioner of any of claims 1 to 7, wherein the heat exchanger (140) further comprises:
a first distributor (147a) into which the plurality of first distribution branch pipes (146a) is merged,
a second distributor (147b) into which the plurality of second distribution branch pipes (146b) is merged,
a first distribution pipe (148a) coupled to the first distributor (147a),
a second distribution pipe (148b) coupled to the second distributor (147b),
a first expansion valve (132a) disposed in the first distribution pipe (148a) and to control a degree of opening, and
a second expansion valve (132b) disposed in the second distribution pipe (148b) and to control a degree of opening,
wherein the first expansion valve (132a) is closed in the air cooling operation and the second expansion valve (132b) is opened in the air cooling operation.

9. The air conditioner of claim 8, wherein the first distributor (147a) is coupled to the bypass pipe (144), and
wherein the intermittent valve (145) is opened in the cooling operation and closed in the heating operation.

## Patentansprüche

1. Klimaanlage, mit:
einem Verdichter (110); und
einem Wärmetauscher (140), der aufweist
eine erste Sammelleitung (141a), die dazu dient, darin ein durch den Verdichter (110) verdichtetes Kältemittel fließen zu lassen,
eine Wärmetauschereinheit (143), die mit der ersten Sammelleitung gekoppelt ist und dazu dient, das Kältemittel thermisch mit Luft zu tauschen,
eine Umgehungsleitung (144), die dazu dient, das in der Wärmetauschereinheit (143) thermisch getauschte Kältemittel in einem Luftkühlungsbetrieb dort hindurch gehen zu lassen,
eine zweite Sammelleitung (141b), die mit der Wärmetauschereinheit (143) gekoppelt ist und dazu dient, das durch die Umgehungsleitung (144) gehende Kältemittel im Luftkühlungsbetrieb darin fließen zu lassen,
**gekennzeichnet durch**:
mehrere erste Sammelabzweigleitungen (142a), um die erste Sammelleitung (141a) und die Wärmetauschereinheit (143) zu koppeln, und
mehrere zweite Sammelabzweigleitungen (142b), um die zweite Sammelleitung (141b) und die Wärmetauschereinheit (143) zu koppeln,
wobei die Wärmetauschereinheit (143) mehrere Kältemittelröhren aufweist, und die mehreren ersten Sammelabzweigleitungen (142a) und die mehreren zweiten Sammelabzweigleitungen (142b) abwechselnd mit einem jeweiligen Ende der die mehreren Kältemittelröhren gekoppelt sind,
wobei der Wärmetauscher (140) ferner aufweist:
mehrere erste Verteilungsabzweigleitungen (146a), die mit der Wärmetauschereinheit (143) gekoppelt sind und dazu dienen, das in der Wärmetauschereinheit (143) thermisch getauschte Kältemittel, nachdem das Kältemittel **durch** die erste Sammelleitung (141a) geht, darin fließen zu lassen, und
mehrere zweite Verteilungsabzweigleitungen (146b), die mit der Wärmetauschereinheit (143) gekoppelt sind und dazu dienen, das in der Wärmetauschereinheit (143) thermisch getauschte Kältemittel, nachdem das Kältemittel **durch** die zweite Sammelleitung (141b), geht, darin fließen zu lassen, wobei mindestens eine der zweiten Verteilungsabzweigleitungen (146b) mindestens eine der ersten Verteilungsabzweigleitungen (146a) kreuzt, und
wobei die mehreren ersten Verteilungsabzweigleitungen (146a) und die mehreren zweiten Verteilungsabzweigleitungen (146b) abwechselnd mit einem jeweiligen anderen Ende der mehreren Kältemittelröhren gekoppelt sind.

2. Klimaanlage nach Anspruch 1, wobei die mehreren ersten Sammelabzweigleitungen (142a) und die mehreren zweiten Sammelabzweigleitungen (142b) eine nach der anderen abwechselnd mit dem jeweiligen Ende der mehreren Kältemittelröhren gekoppelt sind.

3. Klimaanlage nach Anspruch 1, wobei die mehreren ersten Sammelabzweigleitungen (142a) und die mehreren zweiten Sammelabzweigleitungen (142b) in Gruppen von einer oder mehreren abwechselnd mit dem jeweiligen Ende der mehreren Kältemittelröhren gekoppelt sind.

4. Klimaanlage nach einem der Ansprüche 1 bis 3,
wobei die erste Sammelleitung (141a) ein Ende aufweist, das mit dem Verdichter (110) gekoppelt ist,
die erste Sammelleitung (141a) das andere Ende aufweist, das mit der Umgehungsleitung (144) und der zweiten Sammelleitung (141b) gekoppelt ist, und
der Wärmetauscher (140) ferner ein Rückschlagventil (149) aufweist, das in der ersten Sammelleitung (141a) oder der zweiten Sammelleitung (141b) angeordnet ist, um das Kältemittel daran zu hindern, von der ersten Sammelleitung (141a) zur zweiten Sammelleitung (141b) zu fließen.

5. Klimaanlage nach einem der Ansprüche 1 bis 4, wobei der Wärmetauscher (140) ferner ein intermittierendes Ventil (145) aufweist, das in der Umgehungsleitung (144) angeordnet ist, um sich so zu öffnen oder zu schließen, um den Fluss des Kältemittels in der Umgehungsleitung (144) zu steuern.

6. Klimaanlage nach einem der Ansprüche 1 bis 5, wobei die mehreren ersten Verteilungsabzweigleitungen (146a) und die mehreren zweiten Verteilungsabzweigleitungen (146b) eine nach der anderen abwechselnd mit dem jeweiligen anderen Ende der mehreren Kältemittelröhren gekoppelt sind.

7. Klimaanlage nach einem der Ansprüche 1 bis 5, wobei die mehreren ersten Verteilungsabzweigleitungen (146a) und die mehreren zweiten Verteilungsabzweigleitungen (146b) in Gruppen von einer oder mehreren abwechselnd mit dem jeweiligen anderen Ende der mehreren Kältemittelröhren gekoppelt sind.

8. Klimaanlage nach einem der Ansprüche 1 bis 7, wobei der Wärmetauscher (140) ferner aufweist:
einen ersten Verteiler (147a), in dem die mehreren ersten Verteilungsabzweigleitungen (146a) vereinigt sind,
einen zweiten Verteiler (147b), in dem die mehreren zweiten Verteilungsabzweigleitungen (146b) vereinigt sind,
eine erste Verteilungsleitung (148a), die mit dem ersten Verteiler (147a) gekoppelt ist, eine zweite Verteilungsleitung (148b), die mit dem zweiten Verteiler (147b) gekoppelt ist,
ein erstes Expansionsventil (132a), das in der ersten Verteilungsleitung (148a) angeordnet ist und dazu dient, einen Öffnungsgrad zu steuern, und
ein zweites Expansionsventil (132b), das in der zweiten Verteilungsleitung (148b) angeordnet ist und dazu dient, einen Öffnungsgrad zu steuern,
wobei das erste Expansionsventil (132a) im Luftkühlungsbetrieb geschlossen ist und das zweite Expansionsventil (132b) im Luftkühlungsbetrieb geöffnet ist.

9. Klimaanlage nach Anspruch 8, wobei der erste Verteiler (147a) mit der Umgehungsleitung (144) gekoppelt ist, und
wobei das intermittierende Ventil (145) im Kühlungsbetrieb geöffnet ist und im Heizbetrieb geschlossen ist.

## Revendications

1. Climatiseur, comprenant :
un compresseur (110) ; et
un échangeur de chaleur (140), comportant
un premier tuyau collecteur (141a) où s'écoule un réfrigérant comprimé par le compresseur (110),
une unité d'échange de chaleur (143) reliée au premier tuyau collecteur et destinée à effectuer un échange thermique entre le réfrigérant et de l'air,
un tuyau de dérivation (144) où le réfrigérant soumis à l'échange thermique dans l'unité d'échange de chaleur (143) est destiné à passer pendant un processus de refroidissement d'air,
un deuxième tuyau collecteur (141b) relié à l'unité d'échange de chaleur (143) et où le réfrigérant conduit dans le tuyau de dérivation (144) est destiné à s'écouler pendant le processus de refroidissement d'air,
**caractérisé par** :
une pluralité de premiers tuyaux de branchement de collecteur (142a) destinés à relier le premier tuyau collecteur (141a) et l'unité d'échange de chaleur (143), et
une pluralité de deuxièmes tuyaux de branchement de collecteur (142b) destinés à relier le deuxième tuyau collecteur (141b) et l'unité d'échange de chaleur (143),
l'unité d'échange de chaleur (143) comprenant une pluralité de tubes de réfrigération, et la pluralité de premiers tuyaux de branchement de collecteur (142a) et la pluralité de deuxièmes tuyaux de branchement de collecteur (142b) étant alternativement reliés à d'autres extrémités correspondantes de la pluralité de tubes de réfrigération,
l'échangeur de chaleur (140) comprenant en outre :
une pluralité de premiers tuyaux de branchement de distribution (146a) reliés à l'unité d'échange de chaleur (143) et où le réfrigérant soumis à l'échange thermique dans l'unité d'échange de chaleur (143) après passage dans le premier tuyau collecteur (141a) est destiné à s'écouler, et
une pluralité de deuxièmes tuyaux de branchement de distribution (146b) reliés à l'unité d'échange de chaleur (143) et où le réfrigérant soumis à l'échange thermique dans l'unité d'échange de chaleur (143) après passage dans le deuxième tuyau collecteur (141b) est destiné à s'écouler, au moins un des deuxièmes tuyaux de branchement de distribution (146b) croisant au moins un des premiers tuyaux de branchement de distribution (146a), et
la pluralité de premiers tuyaux de branchement de distribution (146a) et la pluralité de deuxièmes tuyaux de branchement de distribution (146b) étant alternativement reliés à d'autres extrémités correspondantes de la pluralité de tubes de réfrigération.

2. Climatiseur selon la revendication 1, où la pluralité de premiers tuyaux de branchement de collecteur (142a) et la pluralité de deuxièmes tuyaux de branchement de collecteur (142b) sont alternativement reliés, un par un, aux extrémités correspondantes de la pluralité de tubes de réfrigération.

3. Climatiseur selon la revendication 1, où la pluralité de premiers tuyaux de branchement de collecteur (142a) et la pluralité de deuxièmes tuyaux de branchement de collecteur (142b) sont alternativement reliés, par groupes d'au moins un, aux extrémités correspondantes de la pluralité de tubes de réfrigération.

4. Climatiseur selon l'une des revendications 1 à 3,
où une extrémité du premier tuyau collecteur (141a) est reliée au compresseur (110), l'autre extrémité du premier tuyau collecteur (141a) est reliée au tuyau de dérivation (144) et au deuxième tuyau collecteur (141b), et
l'échangeur de chaleur (140) comprend en outre un clapet antiretour (149) monté dans le premier tuyau collecteur (141a) ou le deuxième tuyau collecteur (141b) afin d'empêcher le réfrigérant de s'écouler du premier tuyau collecteur (141a) vers le deuxième tuyau collecteur (141b).

5. Climatiseur selon l'une des revendications 1 à 4, où l'échangeur de chaleur (140) comprend en outre une vanne intermittente (145) montée dans le tuyau de dérivation (144), ouverte ou fermée pour commander l'écoulement du réfrigérant dans le tuyau de dérivation (144).

6. Climatiseur selon l'une des revendications 1 à 5, où la pluralité de premiers tuyaux de branchement de distribution (146a) et la pluralité de deuxièmes tuyaux de branchement de distribution (146b) sont alternativement reliés, un par un, à d'autres extrémités correspondantes de la pluralité de tubes de réfrigération.

7. Climatiseur selon l'une des revendications 1 à 5, où la pluralité de premiers tuyaux de branchement de distribution (146a) et la pluralité de deuxièmes tuyaux de branchement de distribution (146b) sont alternativement reliés, par groupes d'au moins un, à d'autres extrémités correspondantes de la pluralité de tubes de réfrigération.

8. Climatiseur selon l'une des revendications 1 à 7, où l'échangeur de chaleur (140) comprend en outre :
un premier distributeur (147a) où débouche la pluralité de premiers tuyaux de branchement de distribution (146a),
un deuxième distributeur (147b) où débouche la pluralité de deuxièmes tuyaux de branchement de distribution (146b),
un premier tuyau de distribution (148a) relié au premier distributeur (147a),
un deuxième tuyau de distribution (148b) relié au deuxième distributeur (147b),
une première vanne de détente (132a) montée dans le premier tuyau de distribution (148a) et destinée à commander un degré d'ouverture, et
une deuxième vanne de détente (132b) montée dans le deuxième tuyau de distribution (148b) et destinée à commander un degré d'ouverture,
la première vanne de détente (132a) étant fermée pendant le processus de refroidissement d'air et la deuxième vanne de détente (132b) étant ouverte pendant le processus de refroidissement d'air.

9. Climatiseur selon la revendication 8, où le premier distributeur (147a) est relié au tuyau de dérivation (144), et
où la vanne intermittente (145) est ouverte pendant le processus de refroidissement et fermée pendant le processus de chauffage.
